# EUROPEAN PATENT SPECIFICATION

(11) **EP 1 314 664 B1**
(45) Date of publication and mention of the grant of the patent: **24.01.2007**
(21) Application number: 02026259.8
(22) Date of filing: 26.11.2002
(51) Int. Cl.: B65G 59/02, B65G 57/24, B65G 61/00, B65G 47/90

(54) **Depalletizing machine with rotatable manipulating head**
Vorrichtung zur Depalletierung mit drehbarem Greifer
Dispositif de dépalettisation avec tête de manipulation pouvant tourner

(30) Priority: 27.11.2001 IT TO20011106
(43) Date of publication of application: 28.05.2003
(73) Proprietor: OMA S.r.l., 37069 Villafranca di Verona (IT)
(72) Inventor: Baldi, Giampietro, 37069 Villafranca di Verona (IT)
(74) Representative: Jorio, Paolo

(56) References cited:
- EP-A- 1 044 905
- FR-A- 2 595 087
- US-A- 3 716 264

## Description

The present invention relates to a semiautomatic depalletizing machine.

More specifically, the present invention relates to a machine for depalletizing glass bottles, to which the following description refers purely by way of example.

In the packing machine industry, numerous types of depalletizing machines are known for receiving a "pallet of bottles" at the input, and supplying at the output a succession of loose bottles for supply to other machines.

"Pallets of bottles" are defined by a given number of layers of bottles stacked on a platform to form, when packed, a block that can be transported easily; and each layer of bottles is defined by a given number of rows of bottles arranged parallel and adjacent to one another on a tray or supporting panel resting on the layer of bottles underneath.

Most known bottle depalletizing machines comprise: a loading platform, on which the pallet to be unpacked is positioned; a product accumulating surface alongside the loading platform; and a manipulating head, which is fitted movably to a supporting frame to move over the loading platform and the accumulating surface to remove a given number of rows of bottles off the top of the pallet on the loading platform, and deposit the rows of bottles on the accumulating surface adjacent to the loading platform.

To remove the rows of products, the manipulating head of depalletizing machines normally comprises a number of gripping devices specially designed and sized according to the type of product for handling.

A depalletizing machine according to the preamble of claim 1 is, for example, known from EP 1 044 905.

In the case of glass bottles, the gripping devices are normally defined by a number of elongated, tubular, inflatable bladders or so-called "inflatable blades" fixed horizontally to the supporting frame of the manipulating head to reproduce the spatial arrangement of the rows of bottles in each layer in the pallet.

When moved over the layer of bottles defining the top of the pallet, the manipulating head positions the "inflatable blades" between the rows of bottles, so that the necks of the bottles in each row of bottles are located between two adjacent "inflatable blades".

The gripping devices are obviously connected to a pneumatic circuit for inflating or deflating the "inflatable blades" on command to engage the necks of the bottles and secure the bottles to the supporting frame of the manipulating head. Each time it moves from the loading platform to the product accumulating surface, the manipulating head therefore removes a whole or part of a layer of bottles off the top of the pallet on the loading platform.

Depalletizing machines of the above type operate superbly providing the pallet is positioned on the loading platform with the rows of bottles perfectly parallel to the "inflatable blades" on the manipulating head of the machine.

Conversely, if the rows of bottles in each layer of the pallet are inclined even only a few degrees with respect to the "inflatable blades", the manipulating head can no longer be inserted inside the top layer of the pallet, thus preventing the machine from operating properly.

It is an object of the present invention to provide a depalletizing machine designed to eliminate the aforementioned drawbacks.

According to the present invention, there is provided a depalletizing machine as claimed in Claim 1.

A non-limiting embodiment of the present invention will be described by way of example with reference to the accompanying drawings, in which:
Figure 1 shows a front view, with parts removed for clarity, of a semiautomatic depalletizing machine in accordance with the teachings of the present invention;
Figure 2 shows a plan view, with parts removed for clarity, of the Figure 1 depalletizing machine;
Figure 3 shows a side view, with parts removed for clarity, of the manipulating head of the Figure 1 and 2 depalletizing machine;
Figure 4 shows a front view of the Figure 3 manipulating head along section line II-II.

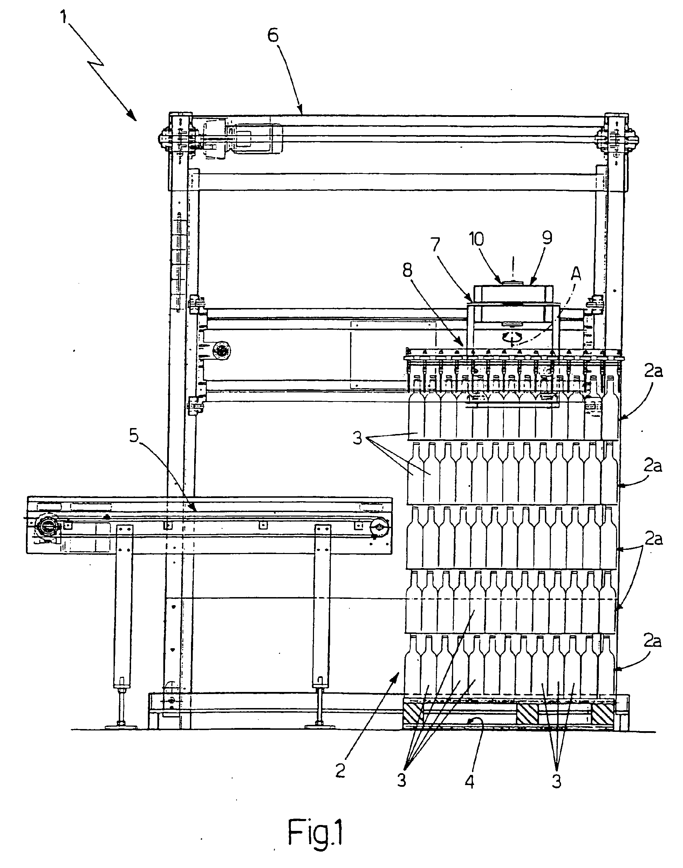

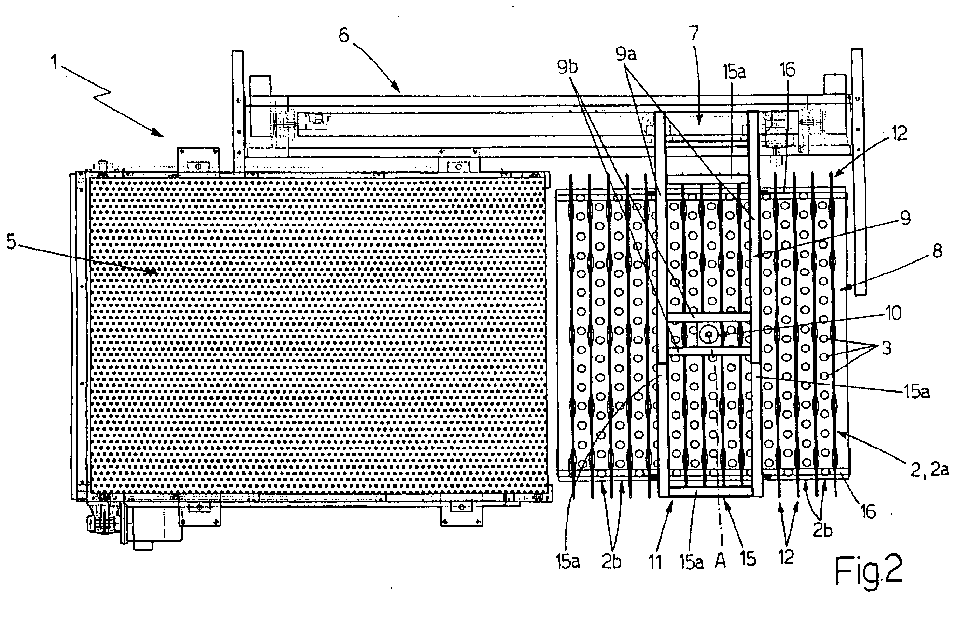

Number 1 in Figures 1 and 2 indicates as a whole a depalletizing machine for automatically or semiautomatically unpacking a pallet 2 of products, and supplying, at the output, a succession of individual products for use on other machines.

In the particular example shown, reference is made to a depalletizing machine 1 for automatically or semiautomatically unpacking a pallet 2 of bottles 3, and supplying, at the output, a succession of individual bottles 3 for use on other machines.

Like any other "pallet of products", pallets 2 of bottles are defined by a compact, orderly group of bottles 3, in turn defined by a number of layers 2a of bottles stacked on a transportable platform to form, when packed, a block that is easy to transport. Each layer 2a of bottles is defined by a given number of parallel, adjacent rows 2b of bottles preferably, though not necessarily, arranged in a five-spot pattern.

In the particular example shown, pallet 2 of bottles 3 is defined by five superimposed layers 2a of bottles, each of which is defined by thirteen rows 2b of bottles arranged in a five-spot pattern; and each row 2b of bottles is defined by fifteen bottles 3.

With reference to Figures 1 and 2, depalletizing machine 1 comprises: a loading platform 4 on which the pallet 2 for unpacking is positioned; a product accumulating surface 5 alongside loading platform 4; a supporting frame 6 spanning loading platform 4 and product accumulating surface 5; and a head slide 7 fitted to frame 6 to move horizontally and vertically over loading platform 4 and product accumulating surface 5.

Depalletizing machine 1 also comprises a manipulating head 8 for retaining and releasing on command a predetermined number of rows 2b of bottles in any layer 2a of bottles in pallet 2. Manipulating head 8 is fixed to and projects from head slide 7 to move over loading platform 4 and product accumulating surface 5 to remove on command a predetermined number of rows 2b of bottles off the top of pallet 2 on loading platform 4, and to deposit the rows 2b of bottles onto product accumulating surface 5 alongside loading platform 4.

More specifically, head slide 7 comprises a horizontal supporting arm 9 projecting over loading platform 4 and product accumulating surface 5; and manipulating head 8 is fixed to the end of supporting arm 9.

Unlike known depalletizing machines, as opposed to being fixed rigidly to the end of supporting arm 9, manipulating head 8 of depalletizing machine 1 is fixed to supporting arm 9 by a connecting member 10 allowing manipulating head 8 to rotate with respect to supporting arm 9 about a substantially vertical axis A of rotation, i.e. perpendicular to loading platform 4.

It should be pointed out that connecting member 10 is designed to only allow manipulating head 8 to rotate about axis A when manipulating head 8 is subjected to a torque over and above a predetermined threshold value, so as to prevent undesired rotation of manipulating head 8 during normal operation of the machine. The torque required to rotate manipulating head 8 may be applied manually by an operator, or mechanically by a mechanical actuator fitted directly to supporting arm 9 or to manipulating head 8 itself.

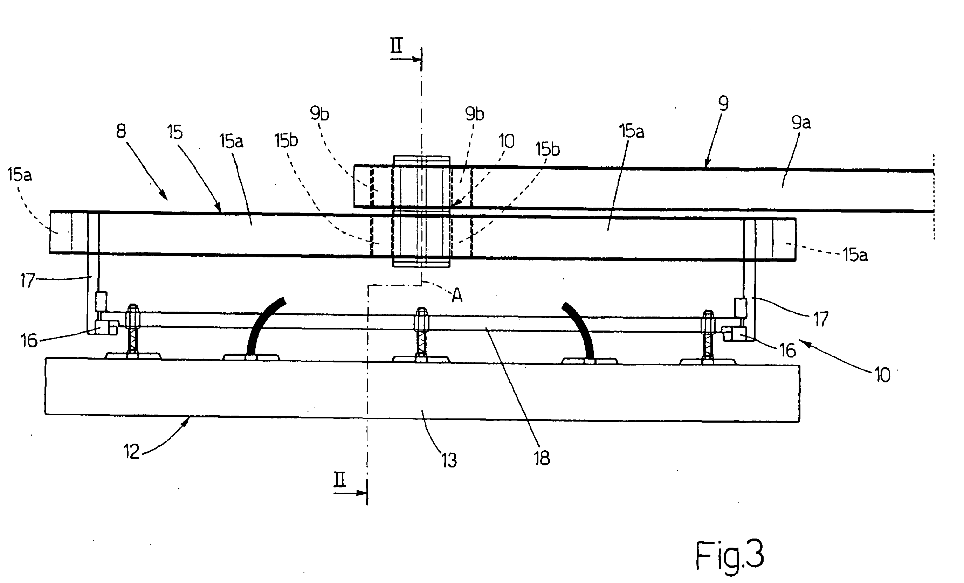

With reference to Figures 2, 3 and 4, in the example shown, supporting arm 9 comprises two rectangular-section longitudinal members 9a extending parallel and facing each other in a horizontal plane perpendicular to axis A; and two reinforcing cross members 9b extending parallel and facing each other in the same plane as longitudinal members 9a, so as to rigidly connect the free ends of the two longitudinal members 9a, and so define, at the end of supporting arm 9, a rectangular frame in which to fit connecting member 10.

With reference to Figures 2, 3 and 4, manipulating head 8 comprises a supporting structure 11 suspended by connecting member 10 from supporting arm 9 and over loading platform 4 and product accumulating surface 5; and a number of gripping devices 12 fitted to supporting structure 11 so as to face loading platform 4 and product accumulating surface 5.

Gripping devices 12 provide for selectively retaining the rows 2b of bottles in the top layer 2a of pallet 2, and are arranged on supporting structure 11 to reproduce the spatial arrangement of rows 2b of bottles in each, or in part of each, layer of pallet 2.

It should be pointed out that the number and arrangement of gripping devices 12 on supporting structure 11 vary, depending on the number of rows 2b of bottles to be removed simultaneously from the top layer 2a of bottles in pallet 2. It is possible, in fact, to remove at one time either a whole layer 2a of bottles, or a number of rows 2b of bottles equal to less than the total number of rows 2b in each layer 2a.

In the example shown, gripping devices 12 are defined by a number of elongated, tubular, inflatable bladders 13 fixed horizontally to supporting structure 11 of manipulating head 8 so as to reproduce the spatial arrangement of the rows 2b of bottles in each layer 2a of pallet 2; and by one or more solenoid valves (not shown) which are opened and closed on command to regulate pressurized airflow to bladders 13, and so control inflation and deflation of bladders 13 on command.

Bladders 13, or so-called "inflatable blades", are widely used and therefore not described in more detail.

As for the solenoid valves controlling inflation and deflation of bladders 13, each is designed to control inflation and deflation of one or more bladders 13, and is normally controlled by an electronic central control unit (not shown) of depalletizing machine 1 to unpack pallet 2 fully or semiautomatically, with a minimum of labour required, and may be shared by a number of bladders 13. One solenoid valve may even be used to simultaneously control all the bladders 13 on manipulating head 8.

In the example shown, bladders 13 are sufficient in number to remove a whole layer 2a of bottles at a time, and are spaced apart on supporting structure 11 with substantially the same spacing as adjacent rows 2b of bottles. The number of bladders 13 is obviously greater (fourteen in the example shown) than the number of rows 2b of bottles in each layer 2a of pallet 2, so that two adjacent bladders 13 correspond to each row 2b of bottles.

When positioned over the top layer 2a of bottles in pallet 2, manipulating head 8 positions bladders 13 between the rows 2b of bottles, so that the necks of bottles 3 in each row 2b are located between two adjacent bladders 13 and, when bladders 13 are inflated, the necks of bottles 3 are gripped to secure bottles 3 integrally to manipulating head 8.

With reference to Figures 2, 3 and 4, in the example shown, supporting structure 11. of manipulating head 8 comprises a top rectangular frame 15 defined by four horizontal rectangular-section box beams 15a in a plane perpendicular to axis A; and two racks 16 for supporting the gripping devices, and each of which extends horizontally beneath a respective short side of rectangular frame 15.

Rectangular frame 15 also comprises two reinforcing cross members 15b for rigidly connecting the long sides of rectangular frame 15 and defining, at the center of rectangular frame 15, a second rectangular frame in which to fit connecting member 10.

Each of the two racks 16 is in the form of a square-section rack-type rod, i.e. a square-section rod having teeth along one of the four major lateral surfaces, and is fixed to top rectangular frame 15 by means of two brackets 17 so that the teeth face upwards, i.e. towards rectangular frame 15.

The two racks 16 support bladders 13, each of which is suspended from a supporting rod 18 horizontally spanning the two racks 16 and fixed at each axial end in easily removable manner to a respective rack 16. The axial ends of supporting rods 18, in fact, are contoured to mesh with the teeth of racks 16.

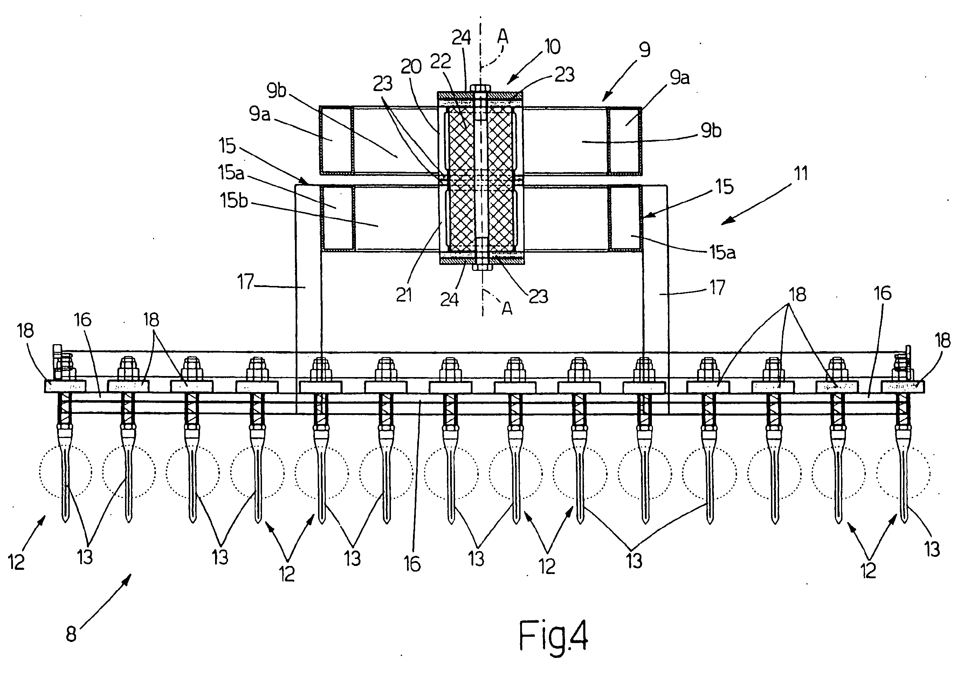

With reference to Figure 4, connecting member 10 extends along axis A and comprises: two parallelepiped-shaped box members 20, 21 coaxial with axis A and located one over the other; a cylindrical guide bush 22 extending, coaxially with axis A, through both box members 20, 21; four friction washers 23 fitted to cylindrical bush 22 in two pairs, each on opposite sides of each box member 20, 21; and two compacting washers 24 fixed to the two axial ends of cylindrical bush 22 by bolts to press friction washers 23 against box members 20, 21 and against each other in the case of the two friction washers 23 between the two box members 20, 21.

Box member 20 is fixed by bolts or similar fastening means to the two reinforcing cross members 9b of supporting arm 9, and box member 21 is fixed by bolts or similar fastening means to the two reinforcing cross members 15b of rectangular frame 15. Friction washers 23 are made of material with a particularly high friction coefficient, so that the two box members 20, 21 can only rotate about axis A by applying a given torque, which is adjustable by adjusting the bolts securing compacting washers 24 to cylindrical bush 22.

Operation of depalletizing machine 1 is easily deducible from the foregoing description, with no further explanation required.

The advantages of depalletizing machine 1 are obvious: the fact that manipulating head 8 can be rotated about axis A to adjust its position with respect to pallet 2 drastically reduces loading time of the machine, thus increasing output. When positioning pallet 2 on loading platform 4, the operator, as opposed to the time-consuming job of adjusting the position of pallet 2, which is of considerable weight and size, so that the rows 2b of bottles in the pallet are perfectly parallel to bladders 13, now simply adjusts manipulating head 8 of the machine directly.

Clearly, changes may be made to depalletizing machine 1 as described and illustrated herein without, however, departing from the scope of the present invention, which is defined by the appended claims.

## Claims

1. A depalletizing machine (1) for unpacking a pallet (2) of products and supplying at the output a succession of single products (3); the depalletizing machine (1) comprising a loading platform (4), on which the pallet (2) for unpacking is positioned; a product accumulating surface (5) located alongside the loading platform (4); a supporting frame (6) spanning said loading platform (4) and said product accumulating surface (5); a head slide (7) fitted movably to said supporting frame (6); and a manipulating head (8) for retaining and releasing on command a predetermined number of rows (2b) of products (3) in any layer (2a) of the pallet (2); said depalletizing machine (1) being **characterized in that** said manipulating head (8) is fixed to said head slide (7) by a connecting member (10) allowing the manipulating head (8) to rotate with respect to the head slide (7) about an axis of rotation (A) substantially perpendicular to said loading platform (4) only when said manipulating head (8) is subjected to a torque over and above a predetermined threshold value.

2. A depalletizing machine as claimed in Claim 1, **characterized in that** said axis of rotation (A) is a substantially vertical axis.

3. A depalletizing machine as claimed in any one of the foregoing Claims, **characterized in that** said head slide (7) comprises a supporting arm (9) projecting over said loading platform (4) and said product accumulating surface (5); said connecting member (10) connecting said manipulating head (8) to the end of said supporting arm (9) .

4. A depalletizing machine as claimed in any one of the foregoing Claims, **characterized in that** said connecting member (10) comprises two parallelepiped-shaped box members (20, 21) coaxial with said axis of rotation (A) and located one over the other; and a cylindrical guide bush (22) extending, coaxially with said axis of rotation (A), through both said box members (20, 21); one (20) of said two box members (20, 21) being fixed to said supporting arm (9), and the other box member (21) being fixed to said manipulating head (8).

5. A depalletizing machine as claimed in Claim 4, **characterized in that** said connecting member (10) comprises a number of friction washers (23) fitted to said cylindrical bush (22) so as to be located, in pairs, on opposite sides of each said box member (20, 21).

6. A depalletizing machine as claimed in Claim 5, **characterized in that** said connecting member (10) comprises at least two compacting washers (24) fixed to the two axial ends of the cylindrical bush (22) by fastening means, so as to press said friction washers (23) against said box members (20, 21).

7. A depalletizing machine as claimed in any one of the foregoing Claims from 3 to 6, **characterized in that** said manipulating head (8) comprises a supporting structure (11) suspended from said supporting arm (9) by said connecting member (10); and a number of gripping devices (12) fixed to said supporting structure (11) so as to face said loading platform (4) and said product accumulating surface (5).

8. A depalletizing machine as claimed in Claim 7, **characterized in that** said gripping devices (12) comprise a number of elongated, inflatable bladders (13) fixed horizontally to said supporting structure (11) of the manipulating head (8) so as to reproduce the spatial arrangement of the rows of products (3); and at least one solenoid valve, which is opened and closed on command to regulate pressurized airflow to said bladders (13) and inflate and deflate the bladders (13) on command.

9. A depalletizing machine as claimed in any one of the foregoing Claims, **characterized in that** said products (3) are bottles (3).

## Patentansprüche

1. Depalettiermaschine (1) zum Entpacken einer Palette (2) von Produkten und Lieferung eine Folge einzelner Produkte (3) an den Ausgang; wobei die Depalettiermaschine (1) eine Ladeplattform (4) umfasst, auf der die Palette (2) zum Entpacken positioniert wird; einer Produktaufnahmefläche (5), die sich entlang der Seite der Ladeplattform befindet (4); einen Tragrahmen (6), der die Ladeplattform (4) und die Produktaufnahmefläche (5) überspannt; einen Kopfschlitten (7), der bewegbar am Tragrahmen (6) angebracht ist; und einen Bearbeitungskopf (8), um auf Befehl eine vorab festgelegte Anzahl an Reihen (2b) des Produkts (3) in einer Ebene (2a) einer Palette (2) zurückzuhalten oder freizugeben; wobei die Depalettiermaschine (1) **dadurch gekennzeichnet ist, dass** der Bearbeitungskopf (8) am Kopfschlitten (7) durch ein Verbindungselement (10) angebracht ist, wodurch der Bearbeitungskopf (8) sich bezüglich des Kopfschlittens (7) um eine Rotationsachse (A) drehen kann, die im Wesentlichen senkrecht zu der Ladeplattform (4) ist, nur wenn der Bearbeitungskopf (8) einem Drehmoment unterliegt, das über einem vorab festgelegtem Grenzwert liegt.

2. Depalettiermaschine nach Anspruch 1, **dadurch gekennzeichnet, dass** die Rotationsachse (A) eine im Wesentlichen vertikale Achse ist.

3. Depalettiermaschine gemäß einem der obigen Ansprüche, **dadurch gekennzeichnet, dass** der Kopfschlitten (7) einen Tragarm (9) umfasst, der über die Ladeplattform (4) und die Produktaufnahmefläche (5) hinaussteht; wobei das Verbindungselement (10) den Bearbeitungskopf (8) mit den Ende des Tragarms (9) verbindet.

4. Depalettiermaschine gemäß einem der obigen Ansprüche, **dadurch gekennzeichnet, dass** das Verbindungselement (10) zwei quaderförmige Kastenelemente (20, 21) koaxial zur Rotationsachse (A) und eines über dem anderen positioniert umfasst, und eine zylindrische Führungsbuchse (22) sich koaxial zur Rotationsachse (A) durch beide Kastenelemente (20, 21) erstreckt; wobei eines (20) der beiden Kastenelemente (20, 21) am Tragarm (9) und das andere Kastenelement (21) am Bearbeitungskopf (8) befestigt ist.

5. Depalettiermaschine gemäß Anspruch 4, **dadurch gekennzeichnet, dass** das Verbindungselement (10) eine Reihe von Reibscheiben (23) umfasst, die an der zylindrischen Buchse (22) angebracht sind, so dass sie paarweise auf den voneinander abgewandten Seiten eines jeden Kastenelements (20, 21) positioniert sind.

6. Depalettiermaschine gemäß Anspruch 5, **dadurch gekennzeichnet, dass** das Verbindungselement (10) mindestens zwei Pressscheiben (24) umfasst, die an den axialen Enden der zylindrischen Buchse (22) durch Befestigungseinrichtungen befestigt sind, so dass sie die Reibscheiben (23) gegen die Kastenelemente (20, 21) pressen.

7. Depalettiermaschine gemäß einem der vorhergehenden Ansprüche 3 bis 6, **dadurch gekennzeichnet, dass** der Bearbeitungskopf (8) eine Stützkonstruktion (11), die sich vom Tragarm (9) durch das Verbindungselement (10) erstreckt, und eine Reihe von Greifvorrichtungen (12) umfasst, die an der Stützkonstruktion (11) befestigt sind, so dass sie der Ladeplattform (4) und der Produktaufnahmefläche (5) gegenüberliegen.

8. Depalettiermaschine nach Anspruch 7, **dadurch gekennzeichnet dass**, die Greifvorrichtungen (12) eine Reihe längsgestreckter, aufblasbarer Blasen (13) enthalten, die horizontal an der Stützkonstruktion (11) des Bearbeitungskopfes (8) befestigt sind, so dass sie die räumliche Anordnung der Produktreihen (3) nachbilden; und zumindest ein Magnetventil, das auf Befehl geöffnet und geschlossen wird, um den Druckluftfluss in die Blasen (13) zu regulieren und die Blasen (13) auf Befehl aufzublasen und zu entleeren.

9. Depalettiermaschine gemäß einem der vorhergehenden Ansprüche, **dadurch gekennzeichnet, dass** die Produkte (3) Flaschen (3) sind.

## Revendications

1. Machine à dépalettiser (1) destinée à déballer une palette (2) de produits et à alimenter au niveau de la sortie une succession de produits uniques (3) ; la machine à dépalettiser (1) comprenant une plateforme de chargement (4), sur laquelle la palette (2) destinée au déballage est positionnée ; une surface d'accumulation de produits (5) située le long de la plateforme de chargement (4) ; un cadre de support (6) encadrant ladite plateforme de chargement (4) et ladite surface d'accumulation de produits (5) ; un chariot porte-têtes (7) installé de manière mobile sur ledit cadre de support (6) ; et une tête de manipulation (8) destinée à retenir et à libérer sur commande un nombre prédéterminé de rangées (2b) de produits (3) dans une quelconque couche (2a) de la palette (2) ; ladite machine à dépalettiser (1) étant **caractérisée en ce que** ladite tête de manipulation (8) est fixée audit chariot porte-têtes (7) par un élément de connexion (10) permettant à la tête de manipulation (8) de tourner par rapport au chariot porte-têtes (7) autour d'un axe de rotation (A) sensiblement perpendiculaire à ladite plateforme de chargement (4) uniquement quand ladite tête de manipulation (8) est soumise à un couple supérieur à une valeur seuil prédéterminée.

2. Machine à dépalettiser selon la revendication 1, **caractérisée en ce que** ledit axe de rotation (A) est un axe sensiblement vertical.

3. Machine à dépalettiser selon l'une quelconque des revendications précédentes, **caractérisée en ce que** ledit chariot porte-têtes (7) comprend un bras de support (9) faisant saillie au-dessus de ladite plateforme de chargement (4) et de ladite surface d'accumulation de produits (5) ; ledit élément de connexion (10) raccordant ladite tête de manipulation (8) à l'extrémité dudit bras de support (9).

4. Machine à dépalettiser selon l'une quelconque des revendications précédentes, **caractérisée en ce que** ledit élément de connexion (10) comprend deux éléments formant boîtes (20, 21) parallélépipédiques coaxiaux audit axe de rotation (A) et situés l'un au-dessus de l'autre ; et une douille de guidage cylindrique (22) s'étendant, de manière coaxiale audit axe de rotation (A), à travers lesdits deux éléments formant boîtes (20, 21) ; l'un (20) desdits deux éléments formant boîtes (20, 21) étant fixé audit bras de support (9) et l'autre élément formant boîte (21) étant fixé à ladite tête de manipulation (8).

5. Machine à dépalettiser selon la revendication 4, **caractérisée en ce que** l'élément de connexion (10) comprend un nombre de rondelles de frottement (23) rapportées sur ladite douille cylindrique (22) de manière à être situées, par paires, sur des côtés opposés de chacun desdits éléments formant boîtes (20, 21).

6. Machine à dépalettiser selon la revendication 5, **caractérisée en ce que** ledit élément de connexion (10) comprend au moins deux rondelles de compactage (24) fixées aux deux extrémités axiales de la douille cylindrique (22) par des moyens de fixation, de manière à presser lesdites rondelles de frottement (23) contre lesdits éléments formant boîtes (20, 21).

7. Machine à dépalettiser selon l'une quelconque des revendications 3 à 6, **caractérisée en ce que** ladite tête de manipulation (8) comprend une structure de support (11) suspendue depuis ledit bras de support (9) par ledit élément de connexion (10); et une pluralité de dispositifs de préhension (12) fixés à ladite structure de support (11) de manière à faire face à ladite plateforme de chargement (4) et à ladite surface d'accumulation de produits (5).

8. Machine à dépalettiser selon la revendication 7, **caractérisée en ce que** lesdits dispositifs de préhension (12) comprennent une pluralité de vessies (13) allongées gonflables fixées horizontalement à ladite structure de support (11) de la tête de manipulation (8) de manière à reproduire la disposition spatiale des rangées de produits (3) ; et au moins une électrovanne qui est ouverte et fermée sur commande pour réguler l'écoulement d'air sous pression vers lesdites vessies (13) et gonfler et dégonfler les vessies (13) sur commande.

9. Machine à dépalettiser selon l'une quelconque des revendications précédentes, **caractérisée en ce que** lesdits produits (3) sont des bouteilles (3).
